# EUROPÄISCHE PATENTSCHRIFT

(11) **EP 4 525 383 B1**
(45) Veröffentlichungstag und Bekanntmachung des Hinweises auf die Patenterteilung: **15.07.2026**
(21) Anmeldenummer: 23197421.3
(22) Anmeldetag: 14.09.2023
(51) Int. Cl.: H04L 25/02, H04B 5/48

(54) **VERFAHREN ZUR KONTAKTLOSEN ÜBERTRAGUNG SERIELLER SIGNALE UND ÜBERTRAGUNGSEINRICHTUNG HIERFÜR**
METHOD FOR CONTACTLESS TRANSMISSION OF SERIAL SIGNALS AND TRANSMISSION DEVICE THEREFOR
PROCÉDÉ DE TRANSMISSION SANS CONTACT DE SIGNAUX SÉRIELS ET DISPOSITIF DE TRANSMISSION POUR CE PROCÉDÉ

(43) Veröffentlichungstag der Anmeldung: 19.03.2025
(73) Patentinhaber: SMW-electronics GmbH, 88074 Meckenbeuren (DE)
(72) Erfinder: Hoffmann-Schneider, René, 88131 Lindau (DE)
(74) Vertreter: Christ, Niko

(56) Entgegenhaltungen:
- US-A1- 2015 207 616
- US-A1- 2018 275 714
- US-A1- 2020 241 591

## Beschreibung

Die vorliegende Erfindung betrifft ein Verfahren zur kontaktlosen Übertragung serieller Signale von einem Sender an einen Empfänger, wobei die Signale von dem Sender in Form eines ersten Bitstroms mit einem ersten Bittakt empfangen und von einer Steuereinheit ausgewertet werden, eine Verzögerungszeit festgelegt und an eine Verzögerungsschaltung übermittelt wird, welche alle Bits der Signale in dem ersten Bitstrom abtastet und, um die Verzögerungszeit verzögert ablegt, sowie eine Übertragungseinrichtung hierfür.

Ein solches Verfahren und eine solche Vorrichtung sind bereits aus der US 2015/207616 A1 vorbekannt. Weiter ist auf die US 2020/241591 A1 und die US 2018/275714 A1 zu verweisen.

Es ist bereits bekannt, Datensignale einer Maschinensteuerung über einen induktiven Koppler an einen Empfänger zu übertragen. Dies erfolgt bereits regelmäßig bei Roboterarmen, um deren freie Drehbarkeit sicherzustellen. Aufgrund der induktiven Übertragung können sowohl Energie als auch Datensignale in Richtung eines an dem Roboterarm angebrachten Greifers übertragen werden, ohne dass eine durchgehende Kabelleitung benötigt wird. Auch ein mehrfaches Drehen, bei dem eine Kabelleitung sich verwinden und irgendwann zu kurz werden oder mechanisch brechen würde, ist dadurch möglich.

Allerdings ist es erforderlich, dass die Datenverbindung zum einen eine möglichst hohe Qualität besitzt, um die an den Greifer übermittelten Stellsignale vollständig zu übermitteln, zum anderen muss die Übermittlung möglichst schnell erfolgen, um synchronisiert arbeiten zu können.

Die Signale werden in der Industrie, wie auch in der Informationstechnik, mithilfe der weit verbreiteten seriellen Schnittstellen über einzelne Leitungen, teilweise mit einer redundanten Leitung doppelt, übertragen. Seriell bedeutet hierbei, dass die zu übertragenden Daten bitweise in zeitlicher Abfolge als serieller Datenstrom, also als Bitstrom, übertragen werden.

Verschiedene Übertragungsprotokolle möglicher Schnittstellen legen hierbei jeweils fest, wie viele einzelne Bits zu einer größeren Übertragungseinheit zusammengefasst und wie diese informationstechnisch codiert werden. Diese größeren Übertragungseinheiten werden in Abhängigkeit von der verwendeten Schnittstelle beispielsweise im Fall von IO-Link als Octet, bei CANbus oder Ethernet als Frame, bei der RS232-Schnittstelle als Wort bezeichnet. Im Rahmen des vorliegenden Dokuments wird im Weiteren allgemein von einem Signal gesprochen. Zusätzlich zu der reinen zu übertragenden Information kann diese Übertragungseinheit noch definierte Bits zur Erkennung von Anfangs- und Endposition, Fehlererkennung und Fehlerkorrektur, oder zur Anpassung an die physikalischen Notwendigkeiten des Übertragungskanals, also zur Synchronisation, enthalten.

Alle oben erwähnten Übertragungsprotokolle benutzen eine oder mehrere fest definierte Übertragungsraten, im Weiteren als Bitraten bezeichnet. Bei IO-Link sind das 4,8Kbit/s, 38,4Kbit/s oder 230,4Kbit/s. Um die Grundlage für eine möglichst störsichere Übertragung zu schaffen, sind für die Übertragungsstandards zulässige Toleranzen bezüglich der zeitlichen Position und damit der Übertragungsrate teilweise sehr genau vorgeschrieben. Der Sender muss diese Toleranzen einhalten und der Empfänger muss zeitliche Abweichungen in einem höheren Maß akzeptieren.

Soll nun eine Übertragung von Daten der beschriebenen Interfaces, beispielsweise bei einem Roboterarm, über eine induktive Übertragungseinrichtung über einen Luftspalt hinweg erfolgen, so muss das Nutzsignal entsprechend der physikalischen Eigenschaften des Übertragungskanals, hier also der induktiven Schnittstelle bestehend aus Sendespulen Luftspalt und Empfangsspule, angepasst werden, da der Übertragungskanal nur bestimmte Frequenzbereiche gut überträgt. Im einfachsten Fall könnte dies eine Umcodierung der zu übertragenden Bits sein, bei leistungsfähigen Übertragungen wird hingegen ein geeignetes Modulationsverfahren gewählt. Prinzipiell gilt das nicht nur für die induktive Übertragung, sondern auch für alle Funkübertragungen oder auch leitungsgebundene Übertragungen wie PowerLine, DSL und auch für optische Verfahren.

Um nun über die induktive Schnittstelle, welche in der Bandbreite aufgrund der Induktivität der dort verwendeten Übertragerspulen stark eingeschränkt ist, dennoch eine akzeptable Bitrate übertragen zu können, sollten die Bits zwischen Sender und Empfänger synchronisiert übertragen werden. Die Synchronisation der Bits bedeutet dabei, dass der Sender oder der Empfänger sich über einen Synchronisationsmechanismus auf die exakte zeitliche Lage der einzelnen Bits synchronisiert. Beide Seiten haben dadurch Kenntnis über die exakte zeitliche Lage einer Startflanke des jeweiligen Bits und einer Endflanke des jeweiligen Bits.

Bei einer Übertragung über die induktive Schnittstelle stellt sich das Problem, dass die zeitliche Lage der einzelnen Bits vom seriellen Interface des Senders nicht mit der zeitlichen Lage der Übertragungszeitpunkte der induktiven Schnittstelle übereinstimmt. Ebenso ist die genaue Frequenz beider Bitraten selbst aufgrund von Toleranzen verschieden, selbst wenn diese auf eine gleiche Frequenz eingestellt sind.

Um dieses Problem zu lösen, ist es naheliegend, die induktive Schnittstelle so auszulegen, dass deren Bitrate bei der induktiven Übertragung ein Mehrfaches der Bitrate des seriellen Signals beträgt. Im Empfänger müssen dennoch die Bits für die serielle Signalausgabe neu synchronisiert werden, um die Anforderungen an das serielle Signal zu erfüllen. Anderenfalls muss mit massiv höheren Taktraten gearbeitet werden, die das Zwanzigfache bis hin zum Tausendfachen der Bitrate des Senders betragen müsste. Aufgrund dieser deutlichen Erhöhung der Bitrate muss eine solche Lösung allerdings als sehr nachteilig angesehen werden, da dies bei schnelleren Schnittstellen mit mehr als 200 Kbit/s induktiv nur mit einem sehr hohen Aufwand zu realisieren ist. Hierbei werden auch Bereiche erreicht, in denen die Übertragungsqualität nicht optimal ist.

Vor diesem Hintergrund liegt der vorliegenden Erfindung die Aufgabe zu Grunde, ein Verfahren und eine Übertragungseinrichtung zur kontaktlosen Übertragung serieller Signale anzugeben, welche eine Verzögerung der übermittelten Nachricht minimalisiert, und gleichzeitig die Qualität der Übertragung möglichst wenig beeinträchtigt.

Gelöst wird diese Aufgabe durch ein Verfahren zur kontaktlosen Übertragung serieller Signale gemäß den Merkmalen des unabhängigen Anspruchs 1 sowie durch eine Übertragungseinrichtung hierfür gemäß den Merkmalen des nebengeordneten Anspruchs 8. Sinnvolle Ausgestaltungen des Verfahrens sowie der Vorrichtung können den sich anschließenden abhängigen Ansprüchen entnommen werden.

Erfindungsgemäß vorgesehen ist insoweit ein Verfahren zur kontaktlosen Übertragung serieller Signale von einem Sender an einen Empfänger, wobei die Signale von dem Sender in Form eines ersten Bitstroms mit einem ersten Bittakt empfangen und von einer Steuereinheit ausgewertet werden, mittels der Steuereinheit innerhalb des ersten Bitstroms nach einem Startbit eines Signals gesucht und eine Verzögerungszeit festgelegt und an eine Verzögerungsschaltung übermittelt wird, welche alle Bits der Signale in dem ersten Bitstrom abtastet und, um die Verzögerungszeit verzögert, jeweils zu einem zweiten Bittakt sequenziell in einem FIFO-Speicher ablegt, und wobei zum Auslesen aus dem FIFO-Speicher anstehende Bits jeweils synchron zum zweiten Bittakt sequenziell ausgelesen und als zweiter Bitstrom mithilfe einer induktiven Übertragungseinheit über einen Luftspalt übertragen und an den Empfänger übermittelt werden.

Weiter ist erfindungsgemäß eine Übertragungseinrichtung zur kontaktlosen Übertragung serieller Signale von einem in einem ersten Bittakt sendenden Sender an einen Empfänger vorgesehen, umfassend eine mit einem zweiten Bittakt sendende induktive Übertragungseinheit, eine Steuereinheit zur Auswertung empfangener Signale und zur Festlegung einer Verzögerungszeit, einen FIFO-Speicher zur verzögerten Zwischenspeicherung der Signale und eine Verzögerungsschaltung zur Abtastung aller Bits der Signale und deren um die Verzögerungszeit verzögerter Weiterleitung an den FIFO-Speicher, wobei die Steuereinheit mit der induktiven Übertragungseinheit, der Verzögerungsschaltung und dem FIFO-Speicher datenverbunden ist und wobei die induktive Übertragungseinheit eine induktive Sendeeinheit umfasst, welche über einen Luftspalt von einer induktiven Empfangseinheit getrennt ist, welche wiederum mit dem Empfänger datenverbunden ist.

Anstatt also durch eine Erhöhung der Abtastrate sicherzustellen, dass die Originalsignale exakt erfasst und reproduziert werden können, wird vielmehr ermittelt, um wieviel ein erster Bittakt des Senders von einem zweiten Bittakt der induktiven Übertragungseinrichtung abweicht. Entsprechend wird das Signal durch Verzögerung so verschoben, dass der erste Bitstrom des ankommenden Signals in einen synchron zu dem zweiten Bittakt der induktiven Übertragungseinrichtung induktiv übertragen und an den Empfänger weitergereicht wird, was durch ein Verzögerungsglied und die Eintragung in einen FIFO-Speicher, also einen Speicher in dem das zuerst eingeschriebene Bit auch zuerst wieder ausgelesen wird, erfolgt. Im Ergebnis erfolgt die Übertragung des Signals über die induktive Übertragungseinrichtung nur minimal zeitversetzt.

Im Einzelnen kann dies dadurch erfolgen, dass die Steuereinheit einen Zeitversatz zwischen dem ersten Bittakt und dem zweiten Bittakt erfasst und die Verzögerungszeit so festlegt, dass sie mindestens dem zeitlichen Abstand zwischen einer Endflanke des Startbits und der nächsten Flanke des zweiten Bittakts und höchstens dem zeitlichen Abstand zwischen einer Startflanke des Startbits und der nächsten Flanke des zweiten Bittakts entspricht, vorzugsweise jedoch ein mittlerer Bereich jedes im ersten Bittakt empfangenen Bits mit dem zweiten Bittakt synchronisiert wird. Signale sind niemals, wie üblicherweise zeichnerisch dargestellt, genau rechteckig. Vielmehr findet an den Flanken ein Überschwingen statt, bevor sich die Signale auf dem vorgegebenen Wert einpendeln. Um stets einen möglichst verlässlichen Wert zu haben, kann daher die Verzögerung so gewählt werden, dass die Abtastung des ersten Bitstroms stets in einem mittleren Bereich des jeweiligen Bits erfolgt, in dem ein eingeschwungener Zustand erreicht ist.

Bevorzugtermaßen kann dabei die Steuereinheit jedes Signal mit einer Schablone vergleichen und fehlende Schlussbits bedarfsweise ergänzen, sofern diese nicht innerhalb des Signals empfangen werden. Da es aufgrund der Verzögerungen und im Rahmen der vorgegebenen Toleranzen vorkommen kann, dass ein Schlussbit nicht mehr abgetastet wird, kontrolliert die Steuereinheit den Aufbau der Signale und vergleicht diesen mit der hierfür bekannten Schablone. Bei einem RS232-Wort wird etwa ein Startbit zu Null gesetzt, es folgen acht Bit Information, dann ein Paritätsbit und schließlich ein Stoppbit, welches für einen Ruhezeitraum gehalten wird. Sofern das Stoppbit hierbei abgeschnitten sein sollte, kann dies aufgrund in der Steuereinheit vorgegebener Information über das verwendete Protokoll ergänzt und auch dann in den FIFO-Speicher geschoben werden, wenn das Stoppbit nicht abgetastet wurde.

Dabei kann vorgesehen sein, dass die Steuereinheit für jedes Signal eine eigene Verzögerungszeit festlegt. Um sicherzustellen, dass aufgrund der geltenden Toleranzen nicht dauerhaft einzelne Bits von den Signalen abgeschnitten werden, kann die Synchronisation mit einigem Vorteil für jedes Signal erneut erfolgen.

Besonders vorteilhaft kann es sein, wenn der zweite Bittakt der induktiven Übertragungseinheit die gleiche Taktrate aufweist wie der erste Bittakt, vorzugsweise einem höchsten für ein verwendetes Signalprotokoll möglichen ersten Bittakt des Senders oder einem ganzzahligen Vielfachen desselben entspricht. Da im vorliegenden Verfahren kein Wechsel der Taktrate erforderlich ist, weil nicht mit einer höheren Auflösung abgetastet werden muss, kann die induktive Übertragung mit einem üblichen Takt erfolgen. Dadurch muss nach der induktiven Übertragung keine weitere Synchronisierung vorgenommen werden, weil der Empfänger das empfangene Signal bereits in der erwarteten Taktrate empfängt. Sofern die Übertragung mit einer höheren Taktrate durchgeführt werden soll, ist auch dies möglich, wobei dafür bevorzugt ein ganzzahliges Vielfaches gewählt werden kann, so dass mehrere Signale in der Zeit eines Signals übertragen werden können. In umgekehrter Richtung kann dies dann einfach wieder - etwa über einen weiteren FIFO-Speicher - an den Empfänger ausgegeben werden. Besonders bevorzugt ist es in diesem Zusammenhang, wenn als erster Bittakt Taktraten von 4,8 Kbit/s, 38,4 Kbit/s, oder 230,4 Kbit/s vorgesehen sind.

Weiter kann vorgesehen sein, dass die Steuereinheit mit geeigneten Mitteln zur Feststellung der Taktrate des ersten Bittakts diese ermittelt und zur Synchronisierung mit dem zweiten Bittakt verwendet. Hierbei ist die Taktrate des zweiten Bittakts der Steuereinheit grundsätzlich bekannt, im Rahmen der Kommunikation mit dem Sender kann die Taktrate des Senders aber entweder eingangs mit diesem ausgehandelt oder aus den Signalen selbst durch Zeitmessung ermittelt werden.

Ebenfalls ist es bevorzugtermaßen möglich, innerhalb eines Takts des zweiten Bittakts mehrere Bits eines Signals oder mehrerer Signale des Senders gleichzeitig an den Empfänger zu übertragen. Im Falle eines solchen Multiplex-Verfahrens können die Signale einander überlagert werden, etwa durch Modulation bzw. Demodulation, so dass eine schnellere und umfangreichere Kommunikation stattfinden kann. Dies kann vor allem dann sinnvoll sein, wenn über eine einzelne induktive Übertragungseinheit eine Mehrzahl von Geräten angesteuert werden sollen, also mehrere Greifer, Sensoren, Aktoren oder Steuerungen. Hierzu kann der Übertragungseinrichtung auf der Seite des induktiven Senders ein Multiplexer zugeordnet sein, wobei in einem solchen Fall ein Demultiplexer auf der Seite des induktiven Empfängers vorgesehen sein müsste.

In konkreter Ausgestaltung kann vorgesehen sein, dass die Übertragungseinrichtung vollständig in Software auf einer CPU, in programmierbarer Logik auf einem FPGA oder einem CPLD, in integrierter Logik auf einem IC oder ASIC oder mit fest verdrahteter Logik, oder aus einer Mischung solcher Komponenten aufgebaut ist. Da die Übertragungseinrichtung weitgehend aus einfachen Komponenten gebildet ist, bestehen entsprechend zahlreiche Realisierungsmöglichkeiten, die sinnvollerweise genutzt werden können.

Schließlich kann die induktive Übertragungseinheit bidirektional aufgebaut sein, also entweder beiderseits kombinierte induktive Sende- und Empfangseinheiten aufweisen, oder beiderseits jeweils eine induktive Sendeeinheit und eine induktive Empfangseinheit aufweisen. Dies ermöglicht es, Signale in beide Richtungen über den Luftspalt zu transportieren, etwa in Richtung des Roboterarms Stellsignale und in Gegenrichtung Bestätigungen und Fehlermeldungen, sowie Messwerte von Sensoren. Im Fall der beidseitigen Verwendung derselben Einrichtungen als Sende- und Empfangsspulen kann sinnvollerweise jeweils die Hälfte der Zeit für eine Richtung eingesetzt werden, so dass die oben beschriebenen Methoden der Verwendung von Bitraten mit Vielfachen der ersten Bitrate und von Multiplexern auch für diesen Fall Verwendung finden können, um trotz des Wegfalls effektiver Sendezeit die benötigten Daten im korrekten Zeitfenster zu übertragen.

Die vorstehend beschriebene Erfindung wird im Folgenden anhand eines Ausführungsbeispiels näher erläutert.

Es zeigen
- Figur 1: ein Prinzipschaltbild einer Übertragungseinrichtung mit einem Sender und einem Empfänger, sowie
- Figur 2: eine Prinzipdarstellung der Bittakte und Bitströme von Sender und induktiver Übertragungseinheit.

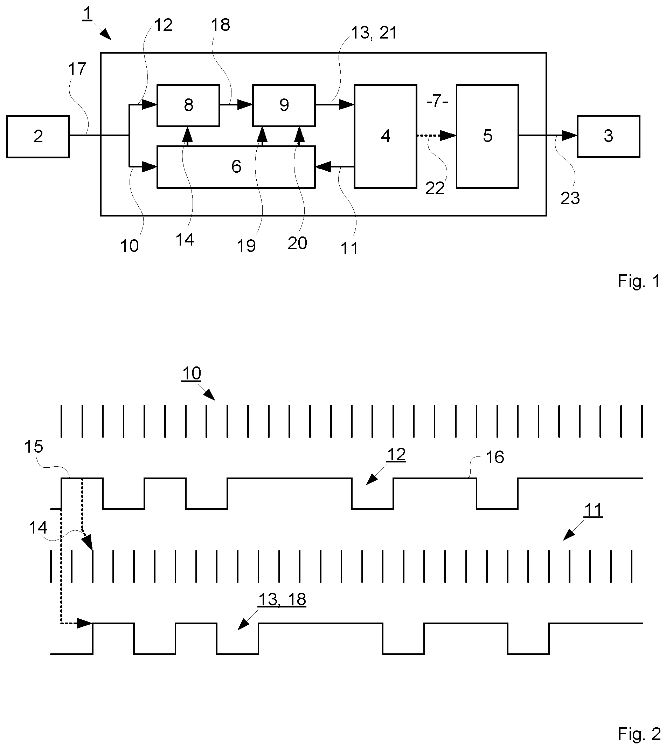

Figur 1 zeigt in einem Prinzipschaltbild eine Übertragungseinrichtung 1, welche mit einem Sender 2 und einem Empfänger 3 datenverbunden sind. Der Sender 2 soll mithilfe der Übertragungseinrichtung 1 Signale 17 an den Empfänger 3 übermitteln. Dabei befindet sich der Sender 2 an einer Basis eines Roboterarms, der Empfänger 3 an dessen drehbar gelagerten Arm selbst. Zwischen dem Sender 2 und dem Empfänger 3 befindet sich der freien Drehbarkeit des Roboterarms wegen ein Luftspalt 7, welcher mithilfe eines Spulenpaars aus einer induktiven Sendeeinheit 4 und einer induktiven Empfangseinheit 5 durch induktive Übertragung 22 überbrückt werden soll.

Das Signal 17 ist seriell aufgebaut und umfasst einen in Figur 2 dargestellten Bitstrom 12. Ein von dem Sender 2 hierbei verwendeter erster Bittakt 10 weicht von einem in der Übertragungseinrichtung 1 verwendeten zweiten Bittakt 11 ab, allerdings ist im vorliegenden Beispiel die Taktrate der beiden Bittakte 10 und 11 gleich gewählt, so dass die Übertragungseinrichtung 1 Signale 17 in der gleichen Bitrate überträgt wie der Sender 2.

Liegt ein Signal 17 zur Übertragung an, so wird dieses von einer Steuereinheit 6 der Übertragungseinrichtung 1 untersucht und abgetastet. Zunächst wird der erste Bittakt 10 erfasst und mit dem zweiten Bittakt 11 der induktiven Sendeeinheit 4 verglichen, um so herauszufinden, wie die beiden Bittakte 10 und 11 sich zueinander verhalten. Hier stellt die Steuereinheit 6 fest, dass die Taktraten beiderseits gleich sind, sie lediglich nicht synchron sind. Die Steuereinheit 6 wird also eine Verzögerungszeit 14 festlegen, welche dafür sorgt, dass ein im Bereich der Mitte eines Bits, idealerweise eines Startbits 15, gelegener Bereich anliegt, wenn der Wert des betreffenden Bits ausgelesen wird.

Die von der Steuereinheit 6 festgelegte Verzögerungszeit 14 wird einer Verzögerungsschaltung 8 weitergeleitet, welche von dem Sender 2 den ersten Bitstrom 12 empfängt. Die einzelnen Bits des ersten Bitstroms 12 werden, um die Verzögerungszeit 14 verzögert, als verzögertes Signal 18 in Form eines zweiten Bitstroms 13 in einen FIFO-Speicher 9 geschrieben, wobei auch hier das jeweilige Schreibsignal 19 von der Steuereinheit 6 an den FIFO-Speicher 9 ausgeht. Sofern aus einem Vergleich des im FIFO-Speicher 9 gespeicherten verzögerten Signals 18 mit einer Schablone des Übertragungsprotokolls hervorgeht, dass aufgrund von Verzögerungen und Toleranzen ein Stoppbit 16 abgeschnitten wurde, wird dieses aufgrund eines zusätzlichen Schreibsignals 19 der Steuereinheit 6 in den FIFO-Speicher geschrieben.

Aufgrund eines Lesesignals 20 der Steuereinheit 6 wird dann jeweils ein Bit des verzögerten Signals 18 in einem zweiten Bitstrom 13 zum zweiten Bittakt 11 ausgelesen und als synchronisiertes Signal 21 von der induktiven Sendeeinheit 4 im Wege einer induktiven Übertragung 22 an die induktive Empfangseinheit 5 über den Luftspalt 7 hinweg übertragen. Das nun über den Luftspalt 7 hinweg übertragene Signal 23 wird an den Empfänger 3 übermittelt und erreicht den Empfänger 3 letztlich nur um die Verzögerungszeit 4 gegenüber dem ersten Bittakt 10 verzögert in der gleichen Bitrate.

Vorstehend beschrieben ist somit ein Verfahren und eine Übertragungseinrichtung zur kontaktlosen Übertragung serieller Signale, welche eine Verzögerung der übermittelten Nachricht minimalisiert, und gleichzeitig die Qualität der Übertragung möglichst wenig beeinträchtigt.

### BEZUGSZEICHENLISTE

- 1: Übertragungseinrichtung
- 2: Sender
- 3: Empfänger
- 4: induktive Sendeeinheit
- 5: induktive Empfangseinheit
- 6: Steuereinheit
- 7: Luftspalt
- 8: Verzögerungsschaltung
- 9: FIFO-Speicher
- 10: erster Bittakt
- 11: zweiter Bittakt
- 12: erster Bitstrom
- 13: zweiter Bitstrom
- 14: Verzögerungszeit
- 15: Startbit
- 16: Schlussbits
- 17: serielles Signal
- 18: verzögertes Signal
- 19: Schreibsignal FIFO
- 20: Lesesignal FIFO
- 21: synchronisiertes Signal
- 22: induktive Übertragung
- 23: übertragenes Signal

## Patentansprüche

1. Verfahren zur kontaktlosen Übertragung serieller Signale (17) von einem Sender (2) an einen Empfänger (3), wobei die Signale (17) von dem Sender (2) in Form eines ersten Bitstroms (12) mit einem ersten Bittakt (10) empfangen und von einer Steuereinheit (6) ausgewertet werden, eine Verzögerungszeit (14) festgelegt und an eine Verzögerungsschaltung (8) übermittelt wird, welche alle Bits der Signale (17) in dem ersten Bitstrom (12) abtastet und, um die Verzögerungszeit (14) verzögert ablegt,
**dadurch gekennzeichnet, dass** mittels der Steuereinheit (6) innerhalb des ersten Bitstroms (12) nach einem Startbit (15) eines Signals (17) gesucht wird und die Verzögerungsschaltung (8) alle Bits der Signale (17) jeweils zu einem zweiten Bittakt (11) sequenziell in einem FIFO-Speicher (9) ablegt, und wobei zum Auslesen aus dem FIFO-Speicher (9) anstehende Bits jeweils synchron zum zweiten Bittakt (11) sequenziell ausgelesen und als zweiter Bitstrom (13) mithilfe einer induktiven Übertragungseinheit über einen Luftspalt (7) übertragen und an den Empfänger (3) übermittelt werden, wobei der zweite Bittakt (11) der Bittakt der induktiven Übertragungseinheit ist und die Steuereinheit (6) einen Zeitversatz zwischen dem ersten Bittakt (10) und dem zweiten Bittakt (11) erfasst und die Verzögerungszeit (14) so festlegt, dass sie mindestens dem zeitlichen Abstand zwischen einer Endflanke des Startbits (15) und der nächsten Flanke des zweiten Bittakts (11) und höchstens dem zeitlichen Abstand zwischen einer Startflanke des Startbits (15) und der nächsten Flanke des zweiten Bittakts (11) entspricht, vorzugsweise jedoch ein mittlerer Bereich jedes im ersten Bittakt (10) empfangenen Bits mit dem zweiten Bittakt (11) synchronisiert wird.

2. Verfahren gemäß Anspruch 1, **dadurch gekennzeichnet, dass** die Steuereinheit (6) jedes Signal (17) mit einer Schablone vergleicht und fehlende Schlussbits (16) bedarfsweise ergänzt, sofern diese nicht innerhalb des Signals (17) empfangen werden.

3. Verfahren gemäß einem der vorhergehenden Ansprüche, **dadurch gekennzeichnet, dass** die Steuereinheit (6) für jedes Signal (17) eine eigene Verzögerungszeit (14) festlegt.

4. Verfahren gemäß einem der vorhergehenden Ansprüche, **dadurch gekennzeichnet, dass** der zweite Bittakt (11) der induktiven Übertragungseinheit die gleiche Taktrate aufweist wie der erste Bittakt (10), vorzugsweise einem höchsten für ein verwendetes Signalprotokoll möglichen ersten Bittakt (10) des Senders (2) oder einem ganzzahligen Vielfachen desselben entspricht.

5. Verfahren gemäß Anspruch 4, **dadurch gekennzeichnet, dass** als erster Bittakt (10) Taktraten von 4,8 Kbit/s, 38,4 Kbit/s, oder 230,4 Kbit/s vorgesehen sind.

6. Verfahren gemäß einem der vorhergehenden Ansprüche, **dadurch gekennzeichnet, dass** die Steuereinheit (6) die Taktrate des ersten Bittakts (10) ermittelt und zur Synchronisierung mit dem zweiten Bittakt (11) verwendet.

7. Verfahren gemäß einem der vorhergehenden Ansprüche, **dadurch gekennzeichnet, dass** innerhalb eines Takts des zweiten Bittakts (11) mehrere Bits eines Signals (17) oder mehrerer Signale (17) des Senders (2) gleichzeitig an den Empfänger (3) übertragen werden.

8. Übertragungseinrichtung zur kontaktlosen Übertragung serieller Signale (17) von einem in einem ersten Bittakt (10) sendenden Sender (2) an einen Empfänger (3), umfassend eine Steuereinheit (6) zur Auswertung empfangener Signale (17) und zur Festlegung einer Verzögerungszeit (14),
**dadurch gekennzeichnet, dass** die Übertragungseinrichtung weiter eine mit ihrem eigenen Bittakt als zweitem Bittakt (11) sendende induktive Übertragungseinheit, einen FIFO-Speicher (9) zur verzögerten Zwischenspeicherung der Signale (17) und eine Verzögerungsschaltung (8) zur Abtastung aller Bits der Signale (17) und deren um die Verzögerungszeit (14) verzögerter Weiterleitung an den FIFO-Speicher (9) umfasst, wobei die Steuereinheit (6) mit der induktiven Übertragungseinheit, der Verzögerungsschaltung (8) und dem FIFO-Speicher (9) datenverbunden ist und wobei die induktive Übertragungseinheit eine induktive Sendeeinheit (4) umfasst, welche über einen Luftspalt (7) von einer induktiven Empfangseinheit (5) getrennt ist, welche wiederum mit dem Empfänger (3) datenverbunden ist, wobei die Steuereinheit (6) Mittel zur Erfassung eines Zeitversatzes zwischen dem ersten Bittakt (10) und dem zweiten Bittakt (11) aufweist und die Verzögerungszeit (14) durch die Steuereinheit (6) so festlegbar ist, dass sie mindestens dem zeitlichen Abstand zwischen einer Endflanke des Startbits (15) und der nächsten Flanke des zweiten Bittakts (11) und höchstens dem zeitlichen Abstand zwischen einer Startflanke des Startbits (15) und der nächsten Flanke des zweiten Bittakts (11) entspricht, vorzugsweise jedoch ein mittlerer Bereich jedes im ersten Bittakt (10) empfangenen Bits mit dem zweiten Bittakt (11) synchronisierbar ist..

9. Übertragungseinrichtung gemäß Anspruch 8, **dadurch gekennzeichnet, dass** die Steuereinheit (6) Mittel zur Feststellung einer Taktrate des ersten Bittakts (10) aufweist.

10. Übertragungseinrichtung gemäß einem der Ansprüche 8 oder 9,
**dadurch gekennzeichnet, dass** die Steuereinheit (6) einen Multiplexer zur gleichzeitigen Übertragung mehrerer Signale über die induktive Übertragungseinheit aufweist.

11. Übertragungseinrichtung gemäß einem der Ansprüche 8 bis 10, **dadurch gekennzeichnet, dass** sie vollständig in Software auf einer CPU, in programmierbarer Logik auf einem FPGA oder einem CPLD, in integrierter Logik auf einem IC oder ASIC oder mit fest verdrahteter Logik, oder aus einer Mischung solcher Komponenten aufgebaut ist.

12. Übertragungseinrichtung gemäß einem der Ansprüche 8 bis 11, **dadurch gekennzeichnet, dass** die induktive Übertragungseinheit bidirektional aufgebaut ist, also entweder beiderseits kombinierte induktive Sende- und Empfangseinheiten aufweist, oder beiderseits jeweils eine induktive Sendeeinheit (4) und eine induktive Empfangseinheit (5) aufweist.

## Claims

1. Method for the contactless transmission of serial signals (17) from a transmitter (2) to a receiver (3), wherein the signals (17) are received by the transmitter (2) in the form of a first bit stream (12) with a first bit clock (10) and are evaluated by a control unit (6), a delay time (14) is defined and transmitted to a delay circuit (8) which samples all bits of the signals (17) in the first bit stream (12) and stores them delayed by the delay time (14),
**characterized in that** the control unit (6) searches within the first bit stream (12) for a start bit (15) of a signal (17) and the delay circuit (8) stores all bits of the signals (17) sequentially in each case at a second bit clock (11) in a first in first out memory (9), and **in that** bits pending for reading out from the first in first out memory (9) are read out sequentially in each case synchronously with the second bit clock (11) and transmitted as a second bit stream (13) by means of an inductive transmission unit across an air gap (7) and transmitted to the receiver (3), wherein the second bit clock (11) is the bit clock of the inductive transmission unit and the control unit (6) detects a time offset between the first bit clock (10) and the second bit clock (11) and sets the delay time (14) in such a way that it is at least equal to the time interval between an end edge of the start bit (15) and the next edge of the second bit clock (11) and at most equal to the time interval between a start edge of the start bit (15) and the next edge of the second bit clock (11), but preferably a middle region of each bit received at the first bit clock (10) is synchronized with the second bit clock (11).

2. Method according to claim 1, **characterized in that** the control unit (6) compares each signal (17) with a template and, if required, adds missing stop bits (16) if these are not received within the signal (17).

3. Method according to one of the preceding claims, **characterized in that** the control unit (6) defines its own delay time (14) for each signal (17).

4. Method according to one of the preceding claims, **characterized in that** the second bit clock (11) of the inductive transmission unit has the same clock rate as the first bit clock (10), preferably corresponds to a highest possible first bit clock (10) of the transmitter (2) for a protocol used or to an integral multiple thereof.

5. Method according to claim 4, **characterized in that** clock rates of 4.8 kbit/s, 38.4 kbit/s or 230.4 kbit/s are provided as a first bit clock (10).

6. Method according to one of the preceding claims, **characterized in that** the control unit (6) determines the clock rate of the first bit clock (10) and uses it for synchronization with the second bit clock (11).

7. Method according to one of the preceding claims, **characterized in that** a plurality of bits of a signal (17) or a plurality of signals (17) of the transmitter (2) are transmitted simultaneously to the receiver (3) within one clock of the second bit clock (11).

8. Transmission device for the contactless transmission of serial signals (17) from a transmitter (2) transmitting at a first bit clock (10) to a receiver (3), comprising a control unit (6) for evaluating received signals (17) and for defining a delay time (14),
**characterized in that** the transmission device further comprises an inductive transmission unit transmitting at its own bit clock as a second bit clock (11), a first in first out memory (9) for delayed intermediate storage of the signals (17) and a delay circuit (8) for sampling all bits of the signals (17) and forwarding them delayed by the delay time (14) to the first in first out memory (9), wherein the control unit (6) is in data communication with the inductive transmission unit, the delay circuit (8) and the first in first out memory (9) and wherein the inductive transmission unit comprises an inductive transmitting unit (4) which is separated across an air gap (7) from an inductive receiving unit (5) which in turn is in data communication with the receiver (3), wherein the control unit (6) has means for detecting a time offset between the first bit clock (10) and the second bit clock (11) and the delay time (14) can be set by the control unit (6) in such a way that it is at least equal to the time interval between an end edge of the start bit (15) and the next edge of the second bit clock (11) and at most equal to the time interval between a start edge of the start bit (15) and the next edge of the second bit clock (11), but preferably a middle region of each bit received at the first bit clock (10) can be synchronized with the second bit clock (11).

9. Transmission device according to claim 8, **characterized in that** the control unit (6) has means for determining a clock rate of the first bit clock (10).

10. Transmission device according to one of claims 8 or 9, **characterized in that** the control unit (6) has a multiplexer for the simultaneous transmission of a plurality of signals via the inductive transmission unit.

11. Transmission device according to one of claims 8 to 10, **characterized in that** it is constructed entirely in software on a central processing unit, in programmable logic on a field programmable gate array or a complex programmable logic device, in integrated logic on an integrated circuit or an application specific integrated circuit or with hard-wired logic, or from a mixture of such components.

12. Transmission device according to one of claims 8 to 11, **characterized in that** the inductive transmission unit is configured bidirectionally, that is it either has combined inductive transmitting and receiving units on both sides, or it has in each case an inductive transmitting unit (4) and an inductive receiving unit (5) on both sides.

## Revendications

1. Procédé de transmission sans contact de signaux sériels (17) d'un émetteur (2) vers un récepteur (3), les signaux (17) étant reçus par l'émetteur (2) sous la forme d'un premier flux de bits (12) avec une première cadence de bits (10) et étant évalués par une unité de commande (6), un temps de retard (14) étant défini et transmis à un circuit de retard (8) qui échantillonne tous les bits des signaux (17) dans le premier flux de bits (12) et les mémorise avec un retard correspondant au temps de retard (14),
**caractérisé en ce que** l'unité de commande (6) recherche, à l'intérieur du premier flux de bits (12), un bit de départ (15) d'un signal (17), et **en ce que** le circuit de retard (8) mémorise tous les bits des signaux (17), séquentiellement et à chaque fois à une deuxième cadence de bits (11), dans une mémoire premier entré premier sorti (9), et **en ce que** les bits en attente de lecture à partir de la mémoire premier entré premier sorti (9) sont lus séquentiellement, à chaque fois de manière synchrone avec la deuxième cadence de bits (11), et transmis, en tant que deuxième flux de bits (13), au moyen d'une unité de transmission inductive à travers un entrefer (7) puis transmis au récepteur (3), la deuxième cadence de bits (11) étant la cadence de bits de l'unité de transmission inductive, et l'unité de commande (6) détectant un décalage temporel entre la première cadence de bits (10) et la deuxième cadence de bits (11) et réglant le temps de retard (14) de telle sorte qu'il soit au moins égal à l'intervalle de temps entre un front de fin du bit de départ (15) et le front suivant de la deuxième cadence de bits (11) et au plus égal à l'intervalle de temps entre un front de début du bit de départ (15) et le front suivant de la deuxième cadence de bits (11), mais de préférence une zone médiane de chaque bit reçu à la première cadence de bits (10) est synchronisée avec la deuxième cadence de bits (11).

2. Procédé selon la revendication 1, **caractérisé en ce que** l'unité de commande (6) compare chaque signal (17) à un gabarit et, le cas échéant, ajoute des bits d'arrêt (16) manquants si ceux-ci ne sont pas reçus à l'intérieur du signal (17).

3. Procédé selon l'une quelconque des revendications précédentes, **caractérisé en ce que** l'unité de commande (6) définit, pour chaque signal (17), un temps de retard (14) propre.

4. Procédé selon l'une quelconque des revendications précédentes, **caractérisé en ce que** la deuxième cadence de bits (11) de l'unité de transmission inductive présente la même fréquence de cadence que la première cadence de bits (10), correspondant de préférence à une première cadence de bits (10) maximale possible de l'émetteur (2) pour un protocole utilisé ou à un multiple entier de celle-ci.

5. Procédé selon la revendication 4, **caractérisé en ce que** des fréquences de cadence de 4,8 kbit/s, 38,4 kbit/s ou 230,4 kbit/s sont prévues comme première cadence de bits (10).

6. Procédé selon l'une quelconque des revendications précédentes, **caractérisé en ce que** l'unité de commande (6) détermine la fréquence de cadence de la première cadence de bits (10) et l'utilise pour la synchronisation avec la deuxième cadence de bits (11).

7. Procédé selon l'une quelconque des revendications précédentes, **caractérisé en ce que** plusieurs bits d'un signal (17) ou plusieurs signaux (17) de l'émetteur (2) sont transmis simultanément au récepteur (3) au cours d'une seule période de la deuxième cadence de bits (11).

8. Dispositif de transmission pour la transmission sans contact de signaux sériels (17) d'un émetteur (2) émettant à une première cadence de bits (10) vers un récepteur (3), comprenant une unité de commande (6) destinée à l'évaluation des signaux (17) reçus et à la définition d'un temps de retard (14),
**caractérisé en ce que** le dispositif de transmission comprend en outre une unité de transmission inductive émettant à sa propre cadence de bits en tant que deuxième cadence de bits (11), une mémoire premier entré premier sorti (9) destinée au stockage intermédiaire retardé des signaux (17) et un circuit de retard (8) destiné à l'échantillonnage de tous les bits des signaux (17) et à leur transfert, avec un retard correspondant au temps de retard (14), vers la mémoire premier entré premier sorti (9), l'unité de commande (6) étant en communication de données avec l'unité de transmission inductive, le circuit de retard (8) et la mémoire premier entré premier sorti (9), et l'unité de transmission inductive comprenant une unité émettrice inductive (4) qui est séparée, à travers un entrefer (7), d'une unité réceptrice inductive (5) qui est à son tour en communication de données avec le récepteur (3), l'unité de commande (6) présentant des moyens de détection d'un décalage temporel entre la première cadence de bits (10) et la deuxième cadence de bits (11) et le temps de retard (14) pouvant être réglé par l'unité de commande (6) de telle sorte qu'il soit au moins égal à l'intervalle de temps entre un front de fin du bit de départ (15) et le front suivant de la deuxième cadence de bits (11) et au plus égal à l'intervalle de temps entre un front de début du bit de départ (15) et le front suivant de la deuxième cadence de bits (11), mais de préférence une zone médiane de chaque bit reçu à la première cadence de bits (10) étant synchronisable avec la deuxième cadence de bits (11).

9. Dispositif de transmission selon la revendication 8, **caractérisé en ce que** l'unité de commande (6) présente des moyens pour déterminer une fréquence de cadence de la première cadence de bits (10).

10. Dispositif de transmission selon l'une quelconque des revendications 8 ou 9, **caractérisé en ce que** l'unité de commande (6) comprend un multiplexeur pour la transmission simultanée de plusieurs signaux via l'unité de transmission inductive.

11. Dispositif de transmission selon l'une quelconque des revendications 8 à 10, **caractérisé en ce qu'**il est réalisé entièrement en logiciel sur une unité centrale de traitement, en logique programmable sur un réseau logique programmable de terrain ou un dispositif logique programmable complexe, en logique intégrée sur un circuit intégré ou un circuit intégré spécifique à une application, ou en logique câblée en dur, ou à partir d'un mélange de tels composants.

12. Dispositif de transmission selon l'une quelconque des revendications 8 à 11, **caractérisé en ce que** l'unité de transmission inductive est réalisée de manière bidirectionnelle, c'est-à-dire qu'elle comprend soit, de part et d'autre, des unités inductives combinées d'émission et de réception, soit, de part et d'autre, respectivement une unité émettrice inductive (4) et une unité réceptrice inductive (5).
